**Europäisches Patentamt**

**European Patent Office**

**Office européen des brevets**

(19)

(11) Numéro de publication : **0 643 990 A1**

(12)

# DEMANDE DE BREVET EUROPEEN

(21) Numéro de dépôt : 94401952.0

(22) Date de dépôt : 02.09.94

(51) Int. Cl.⁶ : **B01J 20/34**

(30) Priorité : **10.09.93 FR 9310795**

(43) Date de publication de la demande :
**22.03.95 Bulletin 95/12**

(84) Etats contractants désignés :
**AT BE DE ES FR GB IT NL PT SE**

(71) Demandeur : **ELF ATOCHEM S.A.**
**4 & 8, Cours Michelet**
**La Défense 10**
**F-92800 Puteaux (FR)**

(72) Inventeur : **Nicol, Pascal**
**45, Avenue du 18ème RI**
**F-64000 Pau (FR)**
Inventeur : **Voirin, Robert**
**7, rue du Passelys**
**F-64300 Orthez (FR)**

(54) **Procédé de nettoyage et de régénération de tamis moléculaire utilisés pour le traitement du styrène.**

(57)    L'invention concerne un procédé de nettoyage et un procédé de régénération de tamis moléculaire ayant été mis en contact avec du styrène.
    Le tamis moléculaire doit être rincé par un solvant approprié, de préférence l'éthylbenzène, puis soumis à un traitement thermique.

EP 0 643 990 A1

La présente demande concerne un procédé de nettoyage et un procédé de régénération d'un tamis moléculaire ayant été mis en contact avec du styrène. Cette mise en contact peut avoir été effectuée dans un but de traitement du styrène, ledit traitement pouvant être une purification du styrène, comme par exemple un séchage.

Il est souhaitable d'utiliser un styrène sec lors de la fabrication de polymères ou copolymères du styrène, en particulier lorsque cette fabrication fait intervenir des catalyseurs très sensibles à l'humidité comme certains dérivés du lithium.

Le nettoyage d'un tamis moléculaire ayant été mis en contact avec du styrène est difficile et l'on ne sait pas le régénérer de façon à ce qu'il soit aussi efficace qu'un tamis vierge de toute utilisation.

La présente invention propose un procédé de nettoyage d'un tamis moléculaire ayant été mis en contact avec du styrène, ledit tamis pouvant alors être régénéré de façon à pouvoir présenter une efficacité satisfaisante, par exemple dans la même utilisation qu'avant régénération. Un tel procédé de régénération est un autre objet de la présente invention.

Le procédé de nettoyage selon l'invention est mis en oeuvre en rinçant le tamis imprégné de styrène par au moins un solvant choisi parmi:

- les hydrocarbures monocycliques saturés ou aromatiques, éventuellement substitués par un groupement hydrocarboné saturé, et contenant de 6 à 12 atomes de carbone, comme le cyclohexane, le benzène, le toluène, l'éthylbenzène, le xylène,
- les hydrocarbures polycycliques, éventuellement substitués par un groupement hydrocarboné saturé, et contenant de 8 à 10 atomes de carbone, comme le naphtalène,
- les éthers cycliques contenant de 4 à 12 atomes de carbone et de préférence 4 atomes de carbone comme le dioxanne et le tétrahydrofuranne,
- les acétates contenant de 2 à 5 atomes de carbone comme l'acétate d'éthyl,
- le méthylphtalate,
- les cétones contenant de 3 à 5 atomes de carbone comme la méthyléthylcétone.
- un mélange de plusieurs des solvants précités.

Parmi les solvants ci-dessus cités, les hydrocarbures monocycliques sont préférés, et parmi eux les aromatiques sont particulièrement préféré. L'éthylbenzène est le meilleur solvant de cette liste.

Lorsqu'un hydrocarbure monocyclique saturé est utilisé, le procédé de nettoyage est de préférence mis en oeuvre à une température allant de 35°C à 90°C.

Dans le cas des autres solvants, on peut opérer de 20°C à 90°C et de préférence de 20°C à 70°C.

Généralement, la mise en contact avec le solvant est réalisée en faisant parcourir le lit de tamis moléculaire par un courant dudit solvant. L'avancement du nettoyage peut être suivi par analyse du liquide ayant traversé le tamis.

La durée de rinçage par le solvant est dépendante de la quantité de tamis, du débit de solvant, de la température, et de la nature du tamis selon que celui-ci retient plus ou moins fortement le styrène.

Le cas échéant, avant rinçage du tamis comme ci-dessus décrit, on peut faire traverser le tamis par un courant d'un gaz inerte comme l'azote et/ou le gaz carbonique et/ou l'hélium, ce qui a pour effet d'éloigner du tamis une partie du styrène qui l'imprégnait.

Le procédé de nettoyage selon l'invention est mis en oeuvre avec un tamis moléculaire constitué d'une zéolithe de préférence de type A, ladite zéolithe étant liée de préférence par un liant kaolinique.

De préférence, la taille des pores de la zéolithe est supérieure ou égale à 0,3 nm (ou 3Å) et inférieure ou égale à 0,6 nm (ou 6Å).

La présente invention concerne également un procédé de régénération de tamis moléculaire ayant été mis en contact avec du styrène. Par ce procédé de régénération, les tamis recouvrent une efficacité satisfaisante, par exemple dans la même utilisation qu'avant régénération, et ce, même après plusieurs cycles d'utilisation/régénération.

Ce procédé de régénération fait tout d'abord intervenir le procédé de nettoyage précédemment décrit, à la suite duquel il convient d'éliminer le ou les solvants utilisés lors du nettoyage et, pour le cas ou le tamis aurait absorbé une ou plusieurs impuretés provenant du styrène, un procédé d'élimination de cette ou ces impuretés.

L'élimination du solvant et des impuretés pourront être réalisées par un traitement thermique approprié. Le profil de température du traitement thermique doit être adapté à la volatilité du solvant de nettoyage ainsi qu'à la résistance du tamis à retenir le solvant et la ou les impuretés.

Ce traitement thermique pourra par exemple comporter deux paliers de température, l'un servant plutôt à éliminer le solvant, l'autre servant plutôt à éliminer les impuretés. Dans le cas où le solvant de rinçage est l'éthylbenzène, celui-ci pourra être éliminé grâce à un palier entre 20°C et 70°C sous balayage d'azote à la pression atmosphérique. Dans le cas où une seule impureté est à éliminer, l'eau, celle-ci pourra l'être de façon suffisante par un palier de température entre 200°C et 300°C, de préférence à environ 250°C, sous balayage d'un gaz inerte comme l'azote ou l'hélium à la pression atmosphérique. Bien entendu, ces conditions d'élimination de l'éthylbenzène et de l'eau sont données à titre purement indicatif, et l'on ne sortirait pas de la présente invention en utilisant un autre traitement thermique adapté, par exemple sous vide.

L'efficacité d'un solvant dans le procédé de nettoyage peut être testée en faisant parcourir un lit de tamis par le solvant à tester et en analysant, en aval du tamis, le styrène dans le solvant au cours du temps. Cette technique peut également servir à juger de l'efficacité avec laquelle un tamis peut être nettoyé. Les analyses de stryrène dans le solvant peuvent être réalisées par chromatographie en phase gazeuses.

L'efficacité de ces solvants et/ou l'efficacité avec laquelle un tamis peut être nettoyé peuvent également être testées en éprouvant la qualité de la régénération du tamis.

L'efficacité du procédé de régénération peut être testée en éprouvant le tamis dans la même utilisation qu'avant régénération. Pour le cas où cette utilisation est le séchage du styrène, on pourra comparer la capacité en eau du tamis exprimée en masse d'eau absorbée en fonction de la masse de tamis utilisé, avant et après régénération, et ce, pour plusieurs cycles successifs de séchage du styrène/régénération.

L'efficacité du procédé de régénération, pour le cas ou le tamis est utilisé pour éliminer une impureté du styrène, peut également être testée par un suivi de l'évolution de la hauteur de la zone de transfert de masse (HZTM) en fonction du nombre de cycles traitement du styrène/régénération.

La hauteur de la zone de transfert de masse est la hauteur de la zone du tamis dans laquelle se fait le transfert de l'impureté à éliminer du styrène vers le tamis.

Pour un lit de tamis en forme de cyclindre parcouru par du styrène à purifier, l'écoulement du styrène se faisant perpendiculairement à la section circulaire dudit cyclindre, la HZTM peut être calculée par la formule :

$$HZTM = (T_e - T_r) . \frac{h}{T_s}$$

dans laquelle, si $C_o$ représente la concentration en impureté en amont du lit de tamis et si C représente la concentration en impureté en aval du lit de tamis,

$T_e$ représente la durée nécessaire pour que $C/C_o = 1$,

$T_r$ représente la durée nécessaire pour que l'impureté soit détectée en aval du lit de tamis,

$T_s$ représente la durée nécessaire pour que $C/C_o = 0,5$ et h représente la hauteur du cylindre que forme le lit de tamis.

## EXEMPLES 1 à 3

Un lit de 570 cm³ (2,7 cm de diamètre, 100 cm de long) de tamis moléculaire constitué d'une zéolithe A et d'un liant en kaolin de type 0,4 nm (ou 4Å), de marque Siliporite NK 10K commercialisé par CECA est imprégné de styrène à saturation à 20°C. Ce lit est ensuite parcouru par 2,5 l/h de solvant de rinçage. La teneur en styrène du solvant en aval du lit est analysée après différentes durées de rinçage.

Les résultats obtenus pour trois solvants différents, sont consignés dans le Tableau 1.

Les résultats montrent que l'éthylbenzène est le meilleur des trois solvants testés. En effet, au début du rinçage, la teneur en styrène est forte, ce qui indique que ce solvant évacue beaucoup de styrène du tamis. Par la suite, la teneur en styrène chute rapidement car le tamis, moins riche en styrène, largue de ce fait moins de styrène.

Le cyclohexane conduit à des résultats sensiblement inférieurs car entraînant moins de styrène en début de rinçage, la teneur en styrène du tamis reste plus élevée avec le temps, et, de ce fait, la teneur en styrène à 2 h 45 mn de rinçage est plus forte que dans le cas de l'éthylbenzène. Enfin, les résultats obtenus avec l'hexane montrent que l'utilisation de ce solvant conduirait à alonger les durées de rinçage de façon incompatible avec un procédé industriel.

## EXEMPLE 4

Un tamis moléculaire de même nature que celui utilisé dans les exemples 1 à 3 est soumis à des cycles séchage de styrène/régénération du tamis.

Le tamis est placé en un lit de 1,2 kg (2,7 cm de diamètre, 180 cm de long).

La partie du cycle correspondant au séchage du styrène est réalisée à 20°C en faisant parcourir le lit de tamis par un débit de 11 kg/h de styrène contenant, en amont du lit, 200 ppm d'eau.

La partie du cycle correspondant à la régénération du tamis est réalisée en faisant tout d'abord parcourir le tamis initialement saturé de styrène par un courant d'azote de 300 Nl/h à 20°C pendant 15 mn. On envoie ensuite à travers le lit de tamis un courant d'éthylbenzène de 7 l/h, 30 mn à 20°C puis 30 mn entre 20 et 70°C, puis 30 mn à 70°C. On réinjecte ensuite un courant d'azote de 300 l/h et l'on fait monter la température de 70 à 210°C en 1 heure, et l'on maintient cette température 2 heures à 210°C toujours avec le même courant d'azote. Enfin, la température est baissée de 210 à 25°C en 5 heures.

Le tableau 2 indique les capacités en eau à l'équilibre ainsi que la hauteur de la zone de transfert de masse (HZTM) du tamis en fonction du nombre de cycles de service du tamis.

Les résultats montrent que l'efficacité du tamis à sécher du styrène ne décroît que lentement grâce au procédé de régénération selon l'invention.

| DUREE DE RINCAGE | % EN POIDS DE STYRENE DANS LE SOLVANT DE RINCAGE EN AVAL DU TAMIS | | |
|---|---|---|---|
| | Exemple 1 solvant : éthylbenzène | Exemple 2 solvant : cyclohexane | Exemple 3 (comparatif) solvant : hexane |
| 1 h | 36 | 35 | 25 |
| 1 h 40 mn | 1,7 | 3 | |
| 2 h | 0,9 | 2 | |
| 2 h 45 mn | 0,5 | 1,5 | 3,5 |

**Tableau 1 :** comparaison de l'éthylbenzène, du cyclohexane et de l'hexane dans leur efficacité à rincer un tamis moléculaire 0,4 nm (ou 4Å)

| NOMBRE DE CYCLES | Capacité en eau du tamis (g $H_2O$/100 g de tamis) | HZTM (cm) |
|---|---|---|
| 3 | 9,38 | 191 |
| 4 | 7,96 | 168 |
| 9 | 6,37 | 180 |
| 26 | 6,21 | 272 |
| 27 | 7,52 | 268 |

**Tableau 2 :** suivi de l'efficacité d'un tamis moléculaire 0,4 nm (ou 4Å) à sécher du styrène en fonction du nombre de cycles séchage du styrène/régénération

## Revendications

1. Procédé de nettoyage d'un tamis moléculaire constitué d'une zéolithe et d'un liant, ledit tamis moléculaire ayant été mis en contact avec du styrène, caractérisé en ce que ledit tamis moléculaire est rincé par au moins un solvant choisi parmi les hydrocarbures monocycliques saturés ou aromatiques, éventuellement substitués, les hydrocarbures polycycliques éventuellement substitués, les éthers cycliques, les acétates, le méthylphtalate, les cétones, ou leurs mélanges.

2. Procédé selon la revendication 1 caractérisé en ce que le solvant est choisi parmi les hydrocarbures monocycliques saturés ou aromatiques, éventuellement substitués, et contenant de 6 à 12 atomes de carbone.

3. Procédé selon la revendication 2 caractérisé en ce que le solvant est choisi parmi les hydrocarbures monocycliques aromatiques, éventuellement substitués, et contenant de 6 à 12 atomes de carbone.

4. Procédé selon la revendication 3 caractérisé en ce que le solvant est l'éthylbenzène.

5. Procédé selon l'une des revendications 1 à 4 caractérisé en ce qu'avant rinçage, le tamis moléculaire ayant été mis en contact avec du styrène est parcouru par un courant d'un gaz inerte.

6. Procédé selon l'une des revendications 1 à 5, caractérisé en ce que la zéolithe est du type A.

7. Procédé selon l'une des revendications 1 à 6, caractérisé en ce que la taille des pores de la zéolithe est supérieure ou égale à 0,3 nm et inférieure ou égale à 0,6 nm.

8. Procédé selon l'une des revendications 1 à 7, caractérisé en ce que le liant est kaolinique.

9. Procédé de régénération d'un tamis moléculaire faisant intervenir un procédé de nettoyage selon l'une des revendications 1 à 8, caractérisé en ce que le procédé de nettoyage est suivi d'un traitement thermique.

10. Procédé selon la revendication 9 caractérisé en ce que le traitement thermique est réalisé sous balayage d'un gaz inerte, à une pression voisine de la pression atmosphérique, et en ce qu'il comporte un palier de température entre 200 et 300°C et de préférence à environ 250°C.

Office européen
des brevets

**RAPPORT DE RECHERCHE EUROPEENNE**

Numero de la demande

EP 94 40 1952

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DATABASE WPI<br>Week 9027,<br>Derwent Publications Ltd., London, GB;<br>AN 90-206326<br>& JP-A-2 138 137 (CHIYODA)<br>* abrégé *<br>--- | 1-3 | B01J20/34 |
| A | DATABASE WPI<br>Week 7810,<br>Derwent Publications Ltd., London, GB;<br>AN 78-18731A<br>& JP-A-53 009 284 (TORAY INDS)<br>* abrégé *<br>--- | 1 | |
| A | US-A-3 622 506 (ARMAND J. DE ROSSET)<br>* colonne 8; revendications 1-3 *<br>--- | 1-3,6,7 | |
| A | US-A-3 691 728 (VAUTRAIN)<br>* colonne 4, ligne 26-37 *<br>* colonne 4-6; revendications 1-10 *<br>--- | 1-4,7 | |
| A | EP-A-0 557 155 (IFP)<br>* colonne 1, ligne 44 - colonne 2, ligne 24 *<br>--- | 1,9,10 | **DOMAINES TECHNIQUES RECHERCHES (Int.Cl.6)**<br><br>B01J |
| A | DATABASE WPI<br>Week 8037,<br>Derwent Publications Ltd., London, GB;<br>AN 80-65370C<br>& SU-A-711 029 (AS AZERB CHEM TECH.)<br>* abrégé *<br>----- | 1,9,10 | |

Le présent rapport a été établi pour toutes les revendications

| Lieu de la recherche | Date d'achèvement de la recherche | Examinateur |
|---|---|---|
| LA HAYE | 21 Novembre 1994 | Wendling, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)

6